Europäisches Patentamt

European Patent Office

Office européen des brevets

(11) Numéro de publication: **0 223 646**
**A1**

## (12) DEMANDE DE BREVET EUROPEEN

(21) Numéro de dépôt: 86402206.6

(22) Date de dépôt: 06.10.86

(51) Int. Cl.⁴: **A 01 C 15/16**

(30) Priorité: 04.10.85 FR 8514773

(43) Date de publication de la demande:
27.05.87 Bulletin 87/22

(84) Etats contractants désignés:
BE CH DE ES FR GB IT LI NL SE

(71) Demandeur: **Cosnet, Pascal**
**"Le Patis"**
**F-72550 Coulans sur Gee (FR)**

(72) Inventeur: **Cosnet, Pascal**
**"Le Patis"**
**F-72550 Coulans sur Gee (FR)**

(74) Mandataire: **Portal, Gérard et al**
**Cabinet Beau de Loménie 55, rue d'Amsterdam**
**F-75008 Paris (FR)**

(54) **Procédé et dispositif de distribution d'un matériau pulvérulent, notamment pour le traitement d'un fourrage, à distribution horizontale.**

(57) L'invention concerne un procédé et un dispositif de distribution d'un matériau pulvérulent.

Ce dispositif est caractérisé en ce qu'il comprend une ouverture (8) de distribution disposée sur l'une (3) des parois frontale (3), arrière (4), et latérales, pour réaliser une distribution sensiblement horizontale.

Fig2

EP 0 223 646 A1

## Description

Procedé et dispositif de distribution d'un matériau pulvérulent notamment pour le traitement d'un fourrage, à distribution horizontale.

La présente invention concerne essentiellement un procédé et dispositif de distribution d'un matériau pulvérulent, notamment pour le traitement d'un fourrage, à distribution horizontale. De préférence, le matériau pulvérulent est constitué par un composé ou une composition approprié pour réaliser la conservation de fourrage.

Connu depuis longtemps pour ses qualités de conservateur, le sel fut employé pendant très longtemps pour conserver des fourrages dans les greniers. Depuis l'apparition des machines à faire les balles rondes, on ne sale plus le fourrage faute de possibilités pratiques. Il en résulte des inconvénients comme les échauffements des fourrages, car l'aération à l'intérieur des balles est médiocre compte tenu de leur volume.

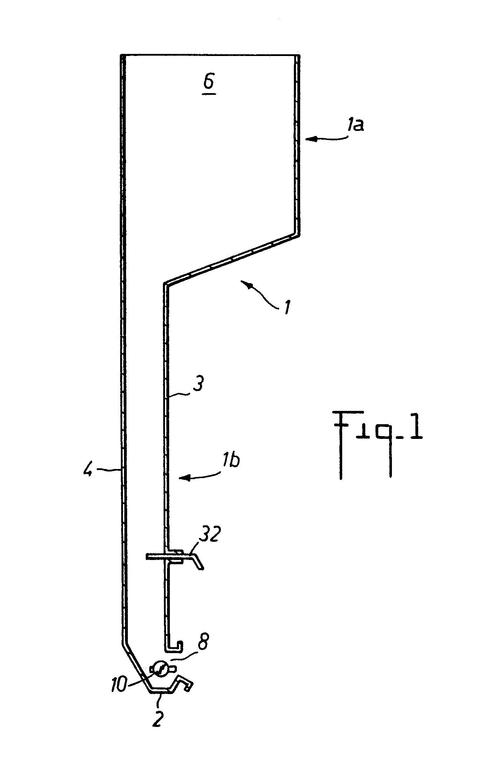

On a déjà proposé dans le document US-A-4 335 855 STASKAL un dispositif 10 de distribution de matériau en poudre pour le traitement du fourrage, en combinaison avec une presse emballeuse 12. Comme cela apparaît à la figure 1, cet appareil 10 distribue des matériaux en poudre à l'entrée de la presse emballeuse 12 depuis une trémie 22, par l'intermédiaire d'un manifold 30 comportant une entrée d'air alimentée par un souffleur d'air 38 et une sortie d'air 34 aboutissant à un dispositif de mélange 40 puis à une buse de distribution 52.

Il est dit en colonne 1, lignes 15-16, que ce matériau de traitement est généralement constitué par un agent conservateur ou un fongicide.

On conçoit qu'il s'agit d'un dispositif de distribution relativement complexe et coûteux, nécessitant la présence d'un souffleur d'air. On observera que la distribution du matériau est réalisée verticalement.

On connaît encore par le document FR-A-2 301 181 un dispositif de salage du fourrage à l'emmagasinage ou ensilage. L'ajout du sel s'effectuant à l'aide d'un doseur commercial (exemple 2, page 10).

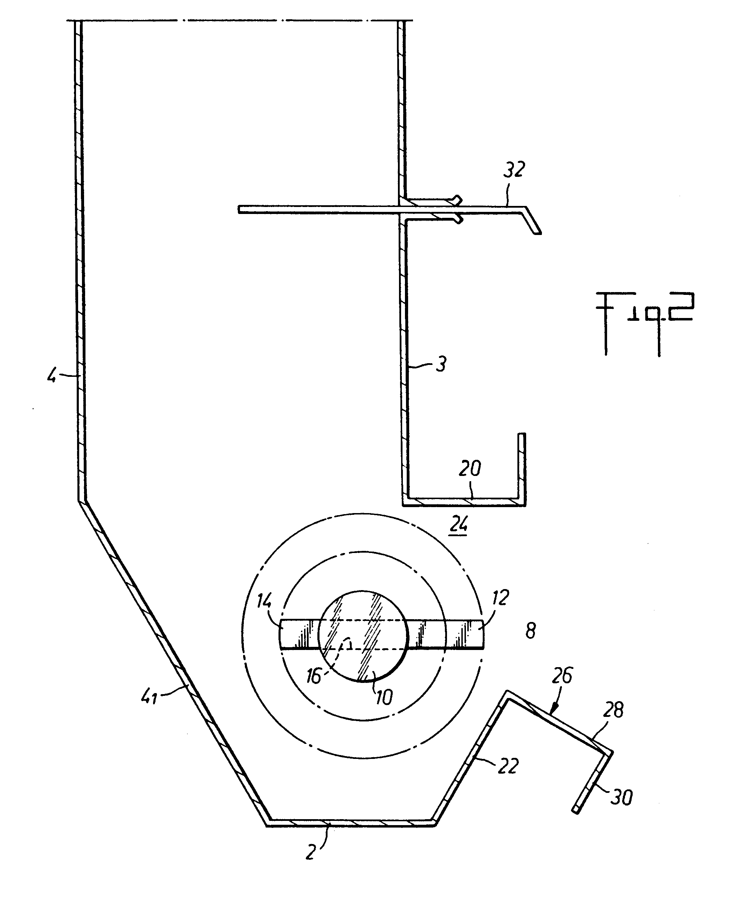

On connaît encore par le document DE-A-3 221 934 un dispositif dit de distribution de matières pulvérulentes depuis une trémie 11, comportant dans son fond divers orifices 17 sélectivement obturables par une plaque 18 montée déplaçable et comportant des orifices tels que 20 pouvant venir en coïncidence avec les orifices 17 (voir figure 2).

Au-dessus de ces orifices est disposé un rotor 32, lui-même disposé en dessous d'une plaque 34 inclinée de manière à faire distribuer le matériau pulvérulent du côté de la prise du rotor 32.

L'entraînement de ce rotor 32 est obtenu par la roue d'entraînement 6. On observera également ici que ce dispositif de distribution réalise une distribution verticale avec réglage du débit par obstruction de l'orifice de sortie. Or, une telle disposition provoque une destruction du matériau pulvérulent, en général sous la forme de granulés d'où la formation de poudre et un risque de bourrage.

Cet inconvénient est encore aggravé par le fait que la limitation du débit se fait en aval du rotor.

La présente invention a donc pour but de résoudre le nouveau problème technique consistant en la fourniture d'une solution permettant de réaliser une distribution d'un matériau pulvérulent sans risque de bourrage et sans destruction du matériau pulvérulent, généralement sous la forme de granulés.

La présente invention a encore pour but de résoudre un nouveau problème technique consistant en la fourniture d'une solution permettant de réaliser un réglage du débit de matériau pulvérulent indépendamment de l'ouverture de distribution.

Ces problèmes techniques sont résolus pour la première fois par la présente invention.

Ainsi, selon un premier aspect, la présente invention fournit un procédé de distribution d'un matériau pulvérulent, notamment pour le traitement d'un fourrage, caractérisé en ce qu'on distribue sensiblement horizontalement le produit depuis un réservoir formant trémie.

Avantageusement, la trémie comporte un rotor, ce procédé est en outre caractérisé en ce qu'on règle le débit de distribution par variation de la vitesse du rotor.

Selon une autre caractéristique avantageuse du procédé selon l'invention, on prévoit un élément de restriction de la section de la trémie, disposé au-dessus du rotor, de préférence réglant la section en fonction de la granulométrie du matériau pulvérulent.

Selon une application particulière de ce procédé, on réalise la distribution du matériau pulvérulent, constitué par un sel pour la conservation du fourrage, sur le fourrage, préalablement au ramassage de celui-ci, le rotor précité étant actionné par un moyen dont le fonctionnement est lié au déplacement du véhicule.

Ainsi, selon la présente invention, la distribution du matériau pulvérulent s'effectue de façon sensiblement constante lorsque le véhicule se déplace tandis que ce débit est arrêté lorsque le véhicule est lui-même à l'arrêt.

Selon une autre variante de réalisation de l'invention, le débit de la distribution est une fonction linéaire de la vitesse du véhicule, ce débit étant nul lorsque le véhicule est à l'arrêt.

Dans ce cas, le fonctionnement du moyen de commande du rotor est lié par exemple à un mouvement rotatif du véhicule.

Selon un deuxième aspect, la présente invention fournit aussi un dispositif de distribution d'un matériau pulvérulent, notamment pour le traitement de fourrage, comprenant un réservoir de matériau pulvérulent formant trémie, comportant un fond, une paroi frontale, une paroi arrière, lesdites parois frontale et arrière étant reliées entre elles par deux parois latérales, ledit réservoir étant pourvu d'une ouverture de distribution dudit matériau pulvérulent, caractérisé en ce que ladite ouverture de distribution est disposée sur l'une desdites parois frontale, arrière et latérales, pour réaliser une distribution sensiblement horizontale. De préférence, l'ouverture de distribution est disposée sur la paroi frontale ou la paroi arrière.

Avantageusement, le réservoir précité comporte une partie supérieure de grande section et une partie inférieure de faible section, la partie inférieure s'étendant de préférence sur une plus grande hauteur que la partie supérieure, afin de permettre en quelque sorte un dosage mécanique du matériau pulvérulent.

En outre, selon un mode de réalisation avantageux, le dispositif selon l'invention est caractérisé en ce que la paroi opposée à celle de l'ouverture de distribution comporte à son extrémité inférieure une partie inclinée en direction de l'ouverture constituant une pente de glissement pour le matériau pulvérulent.

Selon une autre caractéristique avantageuse de l'invention, le dispositif est caractérisé en ce que l'ouverture de distribution est définie par deux replis de la paroi, formant saillie vers l'extérieur.

Selon une autre caractéristique du dispositif selon l'invention, comportant un rotor disposé dans la partie inférieure de la trémie, ce dispositif est caractérisé en ce que le rotor est disposé en regard de l'ouverture et, de préférence, de manière à faire saillie au moins en partie extérieurement par rapport au plan général de la paroi de la partie inférieure comportant l'ouverture.

Selon une autre caractéristique très avantageuse, le dispositif selon l'invention comprend un élément de restriction de la section de la trémie disposé au-dessus (en amont) du rotor, de préférence permettant de limiter la section en fonction de la granulométrie du matériau pulvérulent.

Ainsi, selon la présente invention, on peut réaliser une distribution de matériau pulvérulent, qu'il soit en poudre ou granulés, c'est-à-dire d'une vaste gamme de granulométrie.

Ainsi, ce dispositif de distribution permet une multiplicité d'adaptation ainsi que la distribution de nombreux produits différents, de manière à réaliser le traitement de fourrage quel qu'il soit : blé, maïs, herbe, etc. En outre, la distribution horizontale du matériau pulvérulent permet d'éviter une destruction du matériau pulvérulent, contrairement à la distribution verticale. La forme du réservoir formant trémie fait en outre partie intégrante de l'invention.

Selon l'invention, le réglage du débit du dispositif de distribution se fait de deux manières indépendantes et/ou combinées, à savoir par variation de la vitesse du rotor et par réglage d'un élément de restriction, en général constitué par une plaque, se situant au-dessus du rotor (en amont de celui-ci) permettant de régler le débit en fonction de la granulométrie des produits à épandre.

Ainsi, l'invention permet d'éviter tout risque de bourrage, de destruction du matériau pulvérulent et de régler le débit avant le rotor, ce qui lui permet d'accomplir son travail sans perturbation.

D'autres buts, caractéristiques et avantages de l'invention apparaîtront clairement à la lumière de la description explicative qui va suivre faite en référence aux dessins annexés représentant un mode de réalisation actuellement préféré de l'invention donné simplement à titre d'illustration et qui ne serait donc en aucune façon limiter la portée de l'invention.

Dans les dessins:

- la figure 1 est une vue en coupe verticale d'un dispositif de distribution selon l'invention ; et

- la figure 2 représente une vue en coupe partielle, agrandie de la partie inférieure du dispositif de distribution selon l'invention.

En référence aux figures 1 et 2, un dispositif de distribution selon l'invention d'un matériau pulvérulent, notamment pour le traitement de fourrage, par exemple un sel, comprend un réservoir représenté par le numéro de référence général 1, formant trémie, comportant un fond 2, une paroi frontale 3, une paroi arrière 4, lesdites parois frontale et arrière étant reliées entre elles par deux parois latérales, ici non visibles dans les vues en coupe, le réservoir comportant un sommet, en général ouvert, définissant une ouverture 6 de chargement de matériau pulvérulent. Ce sommet peut être fermé par un couvercle amovible ou articulé.

Ce réservoir formant trémie 1, ci-après désigné trémie, comprend une ouverture 8 de distribution du matériau pulvérulent.

Selon l'invention, ce dispositif est caractérisé en ce que l'ouverture 8 est disposée sur l'une desdites parois frontale 3, arrière 4 et latérales, pour réaliser une distribution sensiblement horizontale. De préférence, l'ouverture est disposée sur la paroi frontale 3, comme représenté ou peut être disposée sur la paroi arrière, ceci dépendant de l'orientation du dispositif relativement au véhicule sur lequel il est généralement monté.

Selon un mode de réalisation avantageux de l'invention, ce réservoir comporte une partie supérieure 1a de grande section et une partie inférieure 1b de faible section. De préférence, la partie inférieure 1b de faible section s'étend sur une plus grande hauteur que la partie supérieure 1a, comme cela est clairement visible à la figure 1.

La présence de cette partie inférieure 1b de faible section permet de réaliser en quelque sorte un dosage mécanique du matériau pulvérulent avant sa distribution.

Habituellement, la trémie 1 comporte également un rotor 10 que l'on voit mieux à la figure 2.

Il est préféré selon l'invention que ce rotor 10 comporte deux séries d'organes de distribution respectivement référencés 12 et 14, de dimension différente, de manière à réaliser une agitation du matériau pulvérulent facilitant sa distribution. Les organes 12 et 14 peuvent être définis par un seul élément introduit dans un orifice traversant 16 du rotor 10.

Selon une autre caractéristique du dispositif selon l'invention, la paroi (ici 4), opposée à celle de l'ouverture (ici 3), comporte à son extrémité inférieure une partie $4_1$ inclinée en direction de l'ouverture 8, et constituant une pente de glissement pour le matériau pulvérulent, comme cela est aisément compréhensible, en vue d'amener le matériau pulvérulent au voisinage immédiat du rotor 10.

Selon une autre caractéristique du dispositif selon l'invention, l'ouverture 8 est définie par deux replis respectivement 20, 22 de la paroi, ici 3, lesdits replis 20, 22 formant saillie vers l'extérieur par rapport au plan général de la paroi 3 à ce niveau. De préférence, le pli supérieur 20 est disposé sensiblement horizontalement tandis que le pli inférieur 22 est disposé incliné vers le haut en direction du rotor 10.

Selon une caractéristique préférée, la partie inclinée $4_1$ de la paroi 4 opposée à l'ouverture 8 et le repli inférieur incliné vers le haut 22 forment avec le fond 2 des angles obtus sensiblement égaux, de préférence égaux à sensiblement 120°.

Selon une autre caractéristique de l'invention, le rotor 10 est disposé de manière à faire saillie par rapport au plan de la paroi, ici 3, comportant l'ouverture 8. On conçoit aisément qu'avantageusement, seulement les organes de distribution du rotor 12 et 14, comme représenté, du rotor 10, font saillie relativement à la paroi 3, dans l'espace 24 rendu disponible par les replis 20, 22 définissant l'ouverture 8.

Avantageusement, le repli inférieur incliné vers le haut 22 comprend en outre une lèvre 26 définie par deux éléments coudés 28, 30 de manière à définir une surface de glissement vers l'extérieur du matériau pulvérulent.

Selon encore une autre caractéristique avantageuse du dispositif selon l'invention, celui-ci est pourvu d'un élément 32 de restriction de la section de la trémie, disposé au-dessus du rotor, comme cela est clairement visible à la figure 2, permettant, de préférence, de régler la section en fonction de la granulométrie du matériau pulvérulent, en étant monté coulissant sur la trémie 1.

On conçoit ainsi que l'on obtient tous les avantages techniques précédemment énoncés, ainsi que la réalisation du procédé préalablement décrit.

Le fonctionnement de ce dispositif est particulièrement simple et résulte clairement de la description précédente.

Selon une caractéristique préférée, ce dispositif de distribution 1 est monté à l'avant d'un véhicule, tel qu'un tracteur, tractant une machine d'emballage de fourrage, par exemple par la formation de balles rondes. Dans ce cas, le matériau pulvérulent peut être constitué par un sel de sorte que l'on réalise alors un salage du fourrage avantageusement au moment du ramassage de l'andain de fourrage. Dans ce cas, le rotor peut être entraîné par divers moyens électriques, hydrauliques, etc. ou par courroie ou chaîne et être commandé par un organe rotatif du dispositif situé sur la machine, soit sur le véhicule lui-même. On peut également prévoir que le dispositif de distribution soit fixé à l'avant de la machine à emballer le fourrage, telle qu'une machine à faire des balles rondes.

Bien entendu, l'invention n'est pas limitée au mode de réalisation qui a été décrit, mais comprend tous les moyens constituant des équivalents techniques des moyens décrits ainsi que leurs diverses combinaisons.

## Revendications

1. Procédé de distribution d'un matériau pulvérulent, notamment pour le traitement d'un fourrage, caractérisé en ce qu'on distribue sensiblement horizontalement le matériau pulvérulent depuis un réservoir formant trémie.

2. Procédé selon la revendication 1, selon lequel la trémie comporte un rotor, caractérisé en ce qu'on règle le débit de distribution par variation de la vitesse de rotation du rotor.

3. Procédé selon la revendication 1 ou 2, caractérisé en ce qu'on prévoit un élément (32) de restriction de la section de la trémie (1), disposé au-dessus du rotor (10), de préférence réglant la section en fonction de la granulométrie du matériau pulvérulent.

4. Dispositif de distribution d'un matériau pulvérulent, notamment pour le traitement de fourrage, comprenant un réservoir (1) d'un matériau pulvérulent formant trémie, comportant un fond (2), une paroi frontale (3), une paroi arrière (4), lesdites parois frontale et arrière étant reliées par deux parois latérales, ledit réservoir étant pourvu d'une ouverture (8) de distribution du matériau pulvérulent, caractérisé en ce que l'ouverture (8) est disposée sur l'une (3) desdites parois frontale (3), arrière (4) et latérales, pour réaliser une distribution sensiblement horizontale.

5. Dispositif de distribution selon la revendication 4, caractérisé en ce que l'ouverture (8) est disposée sur la paroi frontale (3) ou la paroi arrière (4).

6. Dispositif selon la revendication 4 ou 5, caractérisé en ce que le réservoir (1) comporte une partie supérieure (1a) de grande section et une partie inférieure (1b) de faible section, la partie inférieure (1b) s'étendant de préférence sur une plus grande hauteur que la partie supérieure.

7. Dispositif selon l'une des revendications 4 à 6, caractérisé en ce que la paroi (4) opposée à celle de l'ouverture (8) comporte à son extrémité inférieure une partie inclinée (41) en direction de l'ouverture, constituant une pente de glissement pour le matériau pulvérulent.

8. Dispositif selon l'une des revendications 4 à 7, caractérisé en ce que l'ouverture (8) est définie par deux replis (20, 22) de la paroi (3), formant saillie vers l'extérieur par rapport au plan de la paroi (3) à ce niveau.

9. Dispositif selon l'une des revendications 4 à 8, caractérisé en ce que le rotor fait saillie en partie vers l'extérieur par rapport au plan de la paroi (3), à ce niveau.

10. Dispositif selon l'une des revendications 4 à 9, caractérisé en ce qu'il comprend un élément (32) de restriction de la section de la trémie (1) disposé au-dessus du rotor (10), de préférence réglant la section en fonction de la granulométrie du matériau pulvérulent.

**Fig.1**

0223646

Fig 2

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| X | US-A-2 743 662  (PIETROK) <br> * En entier * | 1 | A 01 C  15/16 |
| Y | | 4 | |
| | --- | | |
| Y | US-A-3 272 397  (BEAN) <br> *  Figures  1-3; revendication 1; colonne 1, ligne 60 - colonne  2, ligne 26 * | 4 | |
| | --- | | |
| X | FR-A-  349 659  (FLORSTEDT) <br> * En entier * | 1,2,4, 5,9 | |
| Y | | 6,7,8 | DOMAINES TECHNIQUES RECHERCHES (Int. Cl.4) |
| | --- | | |
| Y | DE-C-  686 206  (HEUER) <br> *  Figures  1,2;  page  2, lignes 41-46 * | 6 | A 01 C |
| | --- | | |
| Y | DE-C-  101 568  (EHMKE) <br> * En entier * | 7 | |
| A | | 1,4,5, 9 | |
| | ---        -/- | | |

Le présent rapport de recherche a été établi pour toutes les revendications

| Lieu de la recherche | Date d'achevement de la recherche | Examinateur |
|---|---|---|
| LA HAYE | 23-12-1986 | MEINDERS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 028 056 (SILVER)<br>* Colonne 2, lignes 43-49; figures 1,3 * | 8 | |
| A | | 1,4,5 | |
| | --- | | |
| X | CA-A- 946 436 (BOYER et al.)<br>* Figures 1-4; revendications 1,8,10 * | 1,2 | |
| A | | 3 | |
| | --- | | |
| X | FR-A-2 063 740 (CARONI)<br>* Figure 1; revendications 1,5,6; page 2, lignes 14-21 * | 1-3 | |
| | ----- | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 23-12-1986 | MEINDERS H. |